# EUROPÄISCHE PATENTSCHRIFT

(11) **EP 2 440 940 B1**
(45) Veröffentlichungstag und Bekanntmachung des Hinweises auf die Patenterteilung: **31.12.2014**
(21) Anmeldenummer: 10711027.2
(22) Anmeldetag: 24.02.2010
(51) Int. Cl.: G01N 35/08

(54) **VORRICHTUNG UND VERFAHREN ZUR ERZEUGUNG UND/ODER ANORDNUNG VON SEQUENZEN EINER ODER MEHRERER FLUIDPROBEN IN EINEM TRÄGERFLUID**
DEVICE AND METHOD FOR GENERATING AND/OR ARRANGING SEQUENCES OF ONE OR MORE FLUID SAMPLES IN A CARRIER FLUID
DISPOSITIF ET PROCÉDÉ DE FORMATION ET/OU D'AGENCEMENT DE SUCCESSIONS D'UN OU PLUSIEURS ÉCHANTILLONS DE FLUIDE DANS UN FLUIDE PORTEUR

(30) Priorität: 11.06.2009 DE 102009025007
(43) Veröffentlichungstag der Anmeldung: 18.04.2012
(73) Patentinhaber: Technische Universität Ilmenau, 98693 Ilmenau (DE)
(72) Erfinder: SCHOBER, Andreas, 90762 Fürth (DE); GROSS, G. Alexander, 64832 Babenhausen (DE); KÖHLER, Michael, 07751 Golmsdorf (DE)
(74) Vertreter: Engel, Christoph Klaus
(86) Internationale Anmeldenummer: PCT/EP2010/052334
(87) Internationale Veröffentlichungsnummer: WO 2010/142471

(56) Entgegenhaltungen:
- EP-A2- 1 972 374
- JP-A- 2008 304 270
- US-A- 5 080 866
- T.HENKEL ET AL: "Chip modules for generation and manipulation of fluid segments for micro serial flow processes" CHEMICAL ENGINEERING JOURNAL, Bd. 101, 2004, Seiten 439-445, XP002594289 in der Anmeldung erwähnt

## Beschreibung

Die vorliegende Erfindung betrifft eine Vorrichtung und ein Verfahren zur Erzeugung und/oder Anordnung von Sequenzen einer oder mehrerer Fluidproben in einem Trägerfluid, welches mit den Fluidproben nicht mischbar ist. Dadurch lassen sich Fluidproben, die beispielsweise in Mikrotiterplatten oder ähnlichen Behältern aufbewahrt werden, in regelmäßige Probensequenzen überführen, um sie automatisiert nachfolgenden Prozessen zuzuführen. Die beschriebene Vorrichtung und das Verfahren eigenen sich gleichzeitig zur Manipulation dieser Probensequenzen in Bezug auf ihre Anzahl, Volumenmenge oder Anordnung im Trägermedium.

Die Prozessierung von Proben mit Hilfe des Verfahrens segmentierter Flüsse (segmented flow Verfahren) hat in den vergangenen Jahren zu zahlreichen Anwendungen geführt. Hierbei wurden verschiedene technische Lösungen und Verfahren zur Erzeugung und Manipulation von Segmenten und Segmentsequenzen beschrieben. Die Prozessierung von flüssigen Proben auf serielle Art und Weise ermöglicht die vorteilhafte Durchführung von Hochdurchsatz-Experimenten mit verschiedenen Anwendungshintergründen.

Segmentierte Probenströme bestehen aus einer flüssigen Probenphase, die als Tröpfchen oder Segmente oder Plug in einer mit der Probenphase nicht mischbaren Trägerflüssigkeit (Separationsphase) innerhalb eines fluidführenden Bauteils eingebettet sind [vgl. "Digital reaction technology by micro segmented flow-components, concepts and applications"; J.M.Köhler, Th.Henkel, A.Grodrian, Th.Kirner, M.Roth, K.Martin, J.Metze; in Chem.Eng.J. 101 (2004) 201- 216.]. Die geometrischen Abmaße des fluidführenden Bauteils sowie das Probenvolumen bestimmen die Geometrie des Segments. Segmentierte Probenströme können stabil ohne Koaleszenz einzelner Segmente geführt und manipuliert werden, wenn der Perimeter des durch die fluidischen Oberflächenkräfte gebildeten Segments mindestens den Kanalquerschnitt ausfüllt. Im kleinsten Falle eines kugelförmigen Tröpfchens mit einem Durchmesser des umgebenden Kanals spricht man von einem Ideal Minimal Segment (IMS) [vgl. "Chip modules for generation and manipulation of fluid segments for micro serial flow processes"; Th.Henkel, T.Bermig, M.Kielpinski, A.Grodrian, J.Metze, J.M.Köhler; in Chem.Eng.J. 101 (2004) 439-445].

Segmentsequenzen können aus einer Vielzahl von Segmenten bestehen, deren Nachbarsegmente sich in der Zusammensetzung jeweils nur graduell voneinander unterscheiden. Entsprechende Sequenzen können durch die gleichzeitige Dosierung von mehreren Probenlösungen und der Separationsphase in einem fluidischen Bauteil erzeugt werden. Ismagilov et al. [vgl. "Reactions in Droplets in Microfluidic Channels"; H.Song, D.L.Chen, R.F.Ismagilov; in Angew. Chem. Int. Ed. 2006, 45, 7336 - 7356; und "A Microfluidic Approach for Screening Submicroliter Volumes against Multiple Reagents by Using Preformed Arrays of Nanoliter Plugs in a Three-Phase Liquid/Liquid/Gas Flow"; B.Zheng, R.F.Ismagilov; in Angew. Chem. 2005, 117, 2576 -2579] beschreiben z.B. eine Düsengeometrie, welche es erlaubt drei Fluidströme mit unterschiedlichen Verhältnissen zu kombinieren und durch Zuführung der Separationsphase graduell abgestufte Segmente zu erzeugen.

Die WO 2004/038363 A2 beschreibt verschiedene Methoden zur Erzeugung und Manipulation von Fluidsegmenten. In sämtlichen Ausführungsformen müssen alle dem Bauteil zugeführten Fluidströme aktiv gepumpt und präzise kontrolliert werden. In dieser Publikation wird die Verwendung vorformatierter Sequenzen (Preformed cartridges) beschrieben. Möglichkeiten zu deren Erzeugung werden jedoch nicht genauer benannt.

Die DE 103 22 893 A1 beschreibt eine Vorrichtung und ein Verfahren zum Zudosieren von Reaktionsflüssigkeiten zu in Separationsmedium eingebetteten Flüssigkeitskompartimenten. Auch hier müssen sämtliche Fluidströme dem Bauteil aktiv zugeführt, d.h. gepumpt werden. In allen beschriebenen Fällen müssen die Ausgangslösungen durch aktives Pumpen aus einem Vorratsgefäß wie z.B. einer gefüllten Spritze den Systemen zu geführt werden. Folglich können mit vertretbarem Aufwand nur einige wenige Ausganglösungen in Segmente überführt werden. Anwendungshintergrund sind hier Experimente, deren Zielparameter sehr empfindlich von der Zusammensetzung einiger definierter Proben / Ingredienzien abhängen. Die adressierbare Diversität der erzeugten Sequenz deckt hierbei lediglich einen definierten Bereich in graduell fein abgestimmten Stufen ab.

Die US 5,080,866 zeigt eine analytische Vorrichtung und ein analytisches Verfahren, bei welchen ein erstes Fluid mithilfe einer ersten Pumpe durch eine Röhre und durch eine T-stückförmige Fluidverbindungsstelle zu einem Sensor geführt wird. Gleichzeitig wird das Fluid mithilfe einer Säugpumpe durch die Fluidverbindungsstelle gepumpt. Dabei wird ein zu analysierendes Fluid durch eine Röhre in die Fluidverbindungsstelle eingesogen. Mithilfe des Sensors wird eine Eigenschaft des zu analysierenden Fluids erfasst.

Aus der JP 2008-304270A ist eine Fluidmessvorrichtung mit einem Referenzlösungsinjektionsanschluss zum Einspeisen von Referenzlösung, einem Messobjektlösungsinjektionsanschluss zum Einspeisen von Messobjektlösung und einem Auslaufstutzen zum Ausspeisen der Referenzlösung und/oder der Messobjektlösung bekannt. Die Anschlüsse und der Auslaufstutzen sind über einen Kanal verbunden. Das in dieser Vorrichtung ausgeführte Verfahren umfasst zunächst einen Schritt, bei welchem Referenzlösung mithilfe eines Einspritzmittels über den Referenzlösungsinjektionsanschluss in den Kanal eingespeist wird. Nach Analyse der Referenzlösung wird diese mithilfe eines Ansaugmittels aus dem Kanal über den Auslaufstutzen abgesogen. Infolge dieses Absaugvorgangs gelangt Messobjektlösung über den Messobjektlösungsinjektionsanschluss in den Kanal, wo diese analysiert wird. In einer sich anschließenden dritten Analyse werden die Ergebnisse der ersten und zweiten Analyse verglichen. Abschließend wird die Messobjektlösung mithilfe des Ansaugmittels aus dem Kanal über den Auslaufstutzen abgesogen. Die Einspeisung der Messobjektlösung erfolgt über den beim Absaugen der Referenzlösung entstehenden Unterdrück.

Die EP 1 972 374 A2 beschreibt ein Mikrofluidelement mit einer Anordnung von Durchflusswegen umfassend einen Knotenpunkt. Der Knotenpunkt umfasst einen sich von einem ersten Zulaufanschluss erstreckenden Durchflussweg und einen sich von einem zweiten Zulaufanschluss erstreckenden Durchflussweg. Der erste Zutaufanschluss ist ein offener Behälter in Form eines Trichters. Der rohrförmige Trichterhals mündet in den Knotenpunkt. Zu Beginn des beschriebenen Verfahrens werden die Durchflusswege mit physiologischer Kochsalzlösung befüllt. Anschließend wird in den ersten Zulaufanschluss ein Tropfen einer Blutplättchenprobe eingespeist. Danach werden gleichzeitig eine Flüssigkeitszuführpumpe und eine Säugpumpe angeschaltet. Die Kochsalzlösung fließt nun durch einen Abflussanschluss, während ein Blutplättchenaggregationsmittel durch den zweiten Zulaufanschluss einfließt. Nachdem im Knotenpunkt ein Pfropfen des Blutplättchenaggregationsmittels erzeugt wurde, wird die Flüssigkeitszuführpumpe ausgeschaltet. Die Blutplättchenprobe wird nun durch den ersten Zulaufanschluss eingespritzt. Anschließend bildet sich ein Pfropfen, in welchem die Blutplättchenprobe vom Blutplättchenaggregationsmittel um schlossen ist. Nun wird auch die Säugpumpe abgeschaltet. Eine Mikropumpe wird eingeschaltet und der Pfropfen wird in Richtung eines Mikromischers bewegt.

Die Überführung von Proben aus in der Laborpraxis üblichen Vorlagegefäßen wie z.B. Mikrotiterplatten in Segmentsequenzen ist mit den bekanten Vorrichtungen und Verfahren nicht möglich oder jedenfalls nicht praktikabel. Die Zudosierung von Probensegementen in ein Trägerfluid wird im Stand der Technik zwar grundsätzlich beschrieben, jedoch sind dazu immer Födereinrichtungen erforderlich, die die Probe aktiv fördern. Dieser Ansatz scheidet bei kleinen Probenmengen oder zahlreichen unterschiedlichen Proben aus, da die Verluste zu groß wären oder der apparative Aufwand unbeherrschbar wird. Segmentsequenzen, die aus einer Abfolge völlig unterschiedlich zusammengesetzter Segmente bestehen, können daher mit den bekannten Verfahren nicht rationell erzeugt werden.

Eine Aufgabe der vorliegenden Erfindung ist es deshalb, eine Vorrichtung und ein Verfahren zur Überführung von fluidischen Proben in vorzugsweise regelmäßige Probensequenzen bereitzustellen. Dabei soll es möglich sein, in Behältern, insbesondere Mikrotiterplatten u.ä. bevorratetet Fluidproben in Form skalierbarer Segmente in ein Trägerfluid einzulagern, ohne dass dazu die Fluidprobe in eine Pumpeneinrichtung aufgenommen werden muss. Als Teilaufgabe wird es angesehen, die Manipulation dieser regelmäßigen Probensequenzen zu gestatten, um beliebig zusammengesetzte, regelmäßige, reproduzierbare Probensequenzen aus einer größeren Anzahl fluidischer Ausgangsproben bereitstellen zu können.

Erfindungsgemäß wird diese Aufgabe durch eine Vorrichtung gemäß Patentanspruch 1 und ein Verfahren gemäß Patentanspruch 8 gelöst. Bevorzugte Ausgestaltungen der Erfindung sind in den Unteransprüchen angegeben.

Die erfindungsgemäße Vorrichtung eignet sich zur schwerkraftunabhängigen Überführung von Fluidproben in regelmäßige Probensequenzen. Dafür ist ein von einem Trägerfluid durchströmter Mikrokanal vorhanden, der mit einer z.B. in einem Behälter befindlichen Fluidprobe in Kontakt gebracht wird. Die Mikrokanalzu- und Mikrokanalableitung können sich außerhalb der jeweiligen Fluidprobe befinden oder sind gegenüber dieser abgedichtet, sodass Fluidprobe über dort nicht in den Kanal eindringen kann. Das Trägerfluid ist mit den Fluidproben nicht mischbar. Der Mikrokanal besitzt im Kontaktbereich mit der Fluidprobe eine Düsenöffnung, deren Querschnitt den hydrodynamischen Querschnitt des Mikrokanals nicht überschreitet.

Ein bevorzugtes Anwendungsfeld der Erfindung sind diversitätsorientierte Hochdurchsatz-Experimente wie z.B. die kombinatorische Chemie. Hierzu ist die Erzeugung und Manipulation von Segmentsequenzen aus beliebig zusammengesetzten Probensegmenten aus einer größeren Anzahl von unterschiedlichen Ausgangsflüssigkeiten notwendig. Zur seriellen Manipulation ist es hier von besonderer Wichtigkeit, dass die Segmente unabhängig von ihrer Zusammensetzung in hoher Regelmäßigkeit sowohl in Größe als auch Abstand voneinander erzeugt werden können. Die vorliegende Erfindung gestattet die Erzeugung und/oder Anordnung solcher Sequenzen aus einer oder mehreren Fluidproben durch die Überführung von Proben unterschiedlichster Zusammensetzung in regelmäßige Segmentserien. Dazu werden die Sequenzen in einem Trägerfluid, welches mit den Fluidproben nicht mischbar ist, ausgebildet und dort entsprechend angeordnet.

Wie bereits erwähnt besitzt die erfindungsgemäße Vorrichtung dafür einen Mikrokanal mit einer Zuleitung, einer Ableitung und einer zwischen Zuleitung und Ableitung in den Mikrokanal mündenden Düsenöffnung. Weiterhin ist eine Fördereinrichtung vorgesehen, die das Trägerfluid mit einem Zuführvolumenstrom V1 über die Zuleitung in den Mikrokanal einpumpt, und gleichzeitig mit einem Abführvolumenstrom V2 über die Ableitung aus dem Mikrokanal absaugt. Schließlich ist mindestens ein die Fluidprobe enthaltender Probenbehälter vorhanden, in welchem die Düsenöffnung mit der Fluidprobe in Kontakt steht. Auf die Form oder Lage des Behälters kommt es dabei nicht an. Entscheidend ist lediglich, dass der Abschnitt des Mikrokanals, der die Düsenöffnung umfasst, in der zu segmentierenden Fluidprobe angeordnet werden kann. Dies ist beispielsweise durch Eintauchen des Mikrokanals in der Fluidprobe oder durch Anschluss einer die Fluidprobe führenden Leitung an die Düsenöffnung möglich. Die Fluidprobe im Behälter muss nicht unter Druck gesetzt werden (kein Pumpen erforderlich), sodass mit offenen Behältern gearbeitet werden kann. Die erfindungsgemäße Vorrichtung umfasst weiterhin eine Steuereinheit, welche die Fördereinrichtung steuert, um das Verhältnis zwischen Zuführvolumenstrom V1 und Abführvolumenstrom V2 zu variieren. Bei geeigneter Dimensionierung der Düsenöffnung gelingt es allein durch Einstellen einer Differenz zwischen Zuführvolumenstrom V1 und Abführvolumenstrom V2, Fluidprobe in das Trägerfluid im Mikrokanal einzusaugen und dort zu segmentieren (sofern V2>V1) oder bei Bedarf überflüssiges Trägermedium zwischen einzelnen Segmenten der Fluidprobe aus dem Mikrokanal durch die Düse nach Außen zu verdrängen, um dadurch den Abstand zwischen einzelnen Segmenten zu verkürzen (sofern V1>V2). Der Querschnitt der Düsenöffnung lässt sich dimensioniere, indem folgende Randbedingungen erfüllt werden: a) wenn der Zuführvolumenstrom gleich dem Abführvolumenstrom ist (V1=V2), tritt kein Trägermedium aus der Düsenöffnung in den Probenbehälter aus und keine Fluidprobe in den Mikrokanal ein; b) wenn der Abführvolumenstrom größer als der Zuführvolumenstrom ist (V2>V1), tritt Fluidprobe in die Düse ein und wird als Probensegment in den Strom des Trägermediums eingelagert. Die Düsenöffnung darf also einerseits nicht so groß werden, dass bei gleichbleibendem Volumenstrom Trägermedium aus der Düse ausläuft. Die maximale Düsenöffnung ist damit unter Berücksichtigung der Eigenschaften des Trägerfluids (Oberflächenspannung) und des Querschnitts des durchströmten Mikrokanals bestimmbar. Andererseits muss die Düsenöffnung ausreichend groß sein, um bei gewählter Differenz zwischen Abführvolumenstrom und Zuführvolumenstrom (V2>V1) das Einsaugen von Fluid in den Mikrokanal zu gestatten. Der in der Düsenöffnung entstehende Kapillardruck darf dabei den Dampfdruck des Trägerfluids nicht überschreiten, damit es nicht zur Verdampfung im Mikrokanal kommt.

In praktischen Realisierungen kann der Mikrokanal einen Querschnitt von vorzugsweise 5 µm² bis 3 mm² besitzen, während der Querschnitt der Düsenöffnung etwa 5 µm² bis 2 mm² beträgt. Als Trägerfluid eignen sich beispielsweise perfluorierte Alkane wie z.B.: Perfluoroktan (C8F18) oder Perfluormethyldecalin (C11F20).

Gemäß dem erfindungsgemäßen Verfahren werden an der Mikrokanalzuführung ein Fluidprobenvolumenstrom V1 und an der Mikrokanalabführung ein Fluidprobenvolumenstrom V2 angelegt. Wenn der Betrag des Fluidprobenvolumenstroms V2 größer als der Betrag des Fluidprobenvolumenstroms V1 ist können die Länge einzelner Probensequenzen und der Abstand zwischen einzelnen Probensequenzen über das Verhältnis V2/V1 eingestellt werden. Grundsätzlich ergibt sich ein Düsenvolumenstrom V3 immer dann, wenn V1≠V2, wobei in abgewandelter Weise auch Teile von Fluidproben oder Trägerfluid aus dem Mikrokanal über die Düse ausgetragen werden können. Ebenso ist es möglich, eine zuvor erzeugte regelmäßige Probensequenz im Mikrokanal mit einer zweiten, mit der ersten mischbaren Fluidprobe zu mischen.

Zur Ausführung des erfindungsgemäßen Verfahrens wird in einem ersten Schritt ein Trägerfluid über eine Zuleitung in einen Mikrokanal mit einem Zuführvolumenstrom V1 zugeführt und gleichzeitig über eine Ableitung aus dem Mikrokanal mit einem Abführvolumenstrom V2 abgesaugt. In einem zweiten Schritt wird eine Düsenöffnung, die sich im Mikrokanal zwischen der Zuleitung und der Ableitung befindet, in eine mit dem Trägermedium nicht mischbare Fluidprobe eingebracht. Im dritten Schritt wird eine Differenz zwischen Zuführvolumenstrom V1 und Abführvolumenstrom V2 so eingestellt, dass V2>V1. Dies führt dazu, dass eine Menge der Fluidprobe durch die Düsenöffnung in den Mikrokanal eingesaugt wird und bei fortgesetztem Betrieb mehrere Segmente der Fluidprobe in das im Mikrokanal geführt Trägermedium eingelagert werden. Die Größe (Volumen) der einzelnen Segmente und deren Abstand im Mikrokanal lassen sich durch Beeinflussung des Verhältnisses zwischen Zuführ- und Abführvolumenstrom einstellen. Das Verhältnis V2:V1 kann vorzugsweise im Bereich 1,05:1 bis 20:1 liegen.

Die Erfindung wird im Folgenden anhand von Zeichnungen näher erläutert. Dabei werden sowohl konstruktive Merkmale der Vorrichtung als auch Einzelheiten des Verfahrens näher erläutert. Es zeigen:
- Fig. 1: eine prinzipielle Darstellung einer erfindungsgemäßen Vorrichtung zur Erzeugung von Sequenzen einer Fluidprobe in einem Trägerfluid;
- Fig. 2: eine schematische Darstellung von vier Schritten bei der Erzeugung einer Probensequenz;
- Fig. 3: vier Ausführungsbeispiele für die Anordnung einer Düsenöffnung in einem Mikrokanal;
- Fig. 4: eine schematische Darstellung des Ablaufs zur Erzeugung einer Segmentsequenz aus unterschiedlichen Fluidproben;
- Fig. 5: ein abgewandeltes Ausführungsbeispiel der erfindungsgemäßen Vorrichtung;
- Fig. 6: eine schematische Darstellung von vier verschiedenen Manipulationen von Segmentsequenzen;
- Fig. 7: eine schematische Darstellung eines Aufbaus zur Vermessung einer im Mikrokanal erzeugten Sequenz;
- Fig. 8: ein Diagramm eines Messsignals einer Segmentfrequenz, die bei V2 = -50 µL/min und V1 = +25 µL/min in einem 0,8 mm ID Schlauch erzeugt wurde;
- Fig. 9: in Diagrammform dargestellte Segmentlängen und Segmentabstände bei unterschiedlichen Verhältnissen V2/V1.

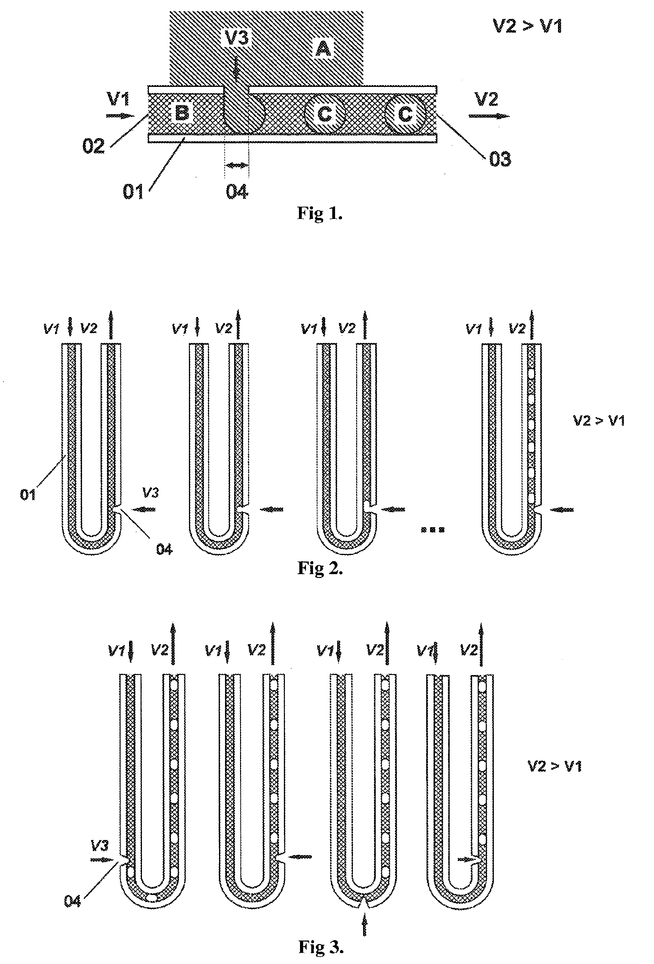

Fig. 1 zeigt den grundsätzlichen Aufbau einer erfindungsgemäßen Vorrichtung zur Erzeugung von Segmenten und zu deren Anordnung in einem Mikrokanal innerhalb eines fluidführenden Bauteils. Hierbei wird ein Transfer von parallel angeordneten Fluidproben zu seriell angeordneten Probensegmenten erreicht. Die Vorrichtung besitzt mindestens einen Mikrokanal 01, der eingangsseitig eine Zuleitung 02 und ausgangsseitig eine Ableitung 03 aufweist. Weiterhin ist mindestens eine Düsenöffnung 04 vorgesehen, die einen zwischen Zuleitung 02 und Ableitung 03 liegenden Zugang zum Mikrokanal schafft. Im Betriebszustand steht die Düsenöffnung 04 mit einer Menge einer Flüssigkeit A (Fluidprobe) in Verbindung, welche bei Wahl geeigneter Strömungsverhältnisse durch die Düsenöffnung 04 in den Mikrokanal 01 eingesaugt werden kann.

Die Vorrichtung besitzt eine beispielsweise durch Spritzenpumpen gebildete Fördereinrichtung (nicht dargestellt), die dem Mikrokanal 01 über die Zuleitung 02 eine weitere mit der Flüssigkeit A nicht mischbare Flüssigkeit B (Trägerfluid) zuführt, mit einem Zuführvolumenstrom V1. Gleichzeitig entnimmt die Fördereinrichtung an der Ableitung 03 des Mikrokanals 01 einen Abführvolumenstrom V2. Sobald der Abführvolumenstrom größer gewählt wird als der Zuführvolumenstrom (V1<V2), wird die sich ergebende Differenz durch einen Düsenvolumenstrom V3 ausgeglichen, sodass Fluidprobe A in den Mikrokanal 01 einströmt. Im Ergebnis entstehen regelmäßige, von der Düsengeometrie und dem Kanaldurchmesser d des Mikrokanals definierte Fluidprobensegmente C und dies unabhängig von der Fluidprobenzusammensetzung.

Der zeitliche Ablauf des Entstehens eines Probensegments und der Anordnung mehrere Segmente in einer Sequenz ist in Fig. 2 verdeutlicht.

Die Geometrie der Düsenöffnung 04 im Mikrokanal des fluidführenden Bauteils darf hierbei im Querschnitt den hydrodynamischen Querschnitt des fluidführenden Mikrokanals 01 nicht überschreiten.

Wie beispielhaft in Fig. 3 dargestellt ist, kann die relative Lage der Düsenöffnung 04 innerhalb des Mikrokanals 01 im fluidführenden Bauteil variieren. Insbesondere ist die Lage der Düsenöffnung 04 relativ zum Pegelstand der Fluidprobe A nicht von Bedeutung, solange sichergestellt ist, dass die Düsenöffnung 04 jederzeit von der Fluidprobe A bedeckt bzw. umgeben ist. Die Überführung von Segmenten der Fluidprobe in das Trägerfluid erfolgt schwerkraftunabhängig.

In dem Mikrokanal 01 des fluidführenden Bauteils werden in Fliessrichtung des Trägerfluids B vor der Düsenöffnung 04 der Zuführvolumenstrom (Flussrate) V1 und nach der Düsenöffnung 04 der Abführvolumenstrom (Flussrate) V2 angelegt. Zum Transfer der Probenlösung A (Fluidprobe) in eine serielle Sequenz muss die Flussrate V2 nach der Düsenöffnung 04 größer als die Flussrate V1 vor der Düsenöffnung 04 sein. Daraus resultiert der Düsenvolumenstrom (Flussrate) V3 an der Düsenöffnung 04 in den Mikrokanal 01 des fluidführenden Bauteils hinein. Die geometrischen Bedingungen sowie die auftretenden Oberflächenkräfte führen dabei zur Bildung von regelmäßigen Fluidprobensegmenten C. Sowohl die Segmentlänge als auch der Abstand voneinander können durch Variation des Flussratenverhältnisses V2/V1 eingestellt werden. Durch Änderung des Abführvolumenstroms V2 kann die Größe der entstehenden Segmente gesteuert werden. Die Frequenz der Segmente wird durch die Flussrate V2 bestimmt. Je höher V2 desto höher die Segmentbildungsfrequenz. Ist der Abführvolumenstrom V2 nur wenig größer als der Zuführvolumenstrom V1 (z.B. 5 bis 15%), so bilden sich kleine, kugelförmige Segmente C (Fig. 1). Beim Einsaugen der Fluidprobe A durch die Düsenöffnung 04 reißt das Segment ab, sobald die Fluidprobe die der Düsenöffnung gegenüberliegende Wandung des Mikrokanals 01 erreicht. Ist der Abführvolumenstrom V2 deutlich größer als der Zuführvolumenstrom V1 (z.B. 20 bis 80%), so werden langgestreckte Segmente C im Trägerfluid ausgebildet.

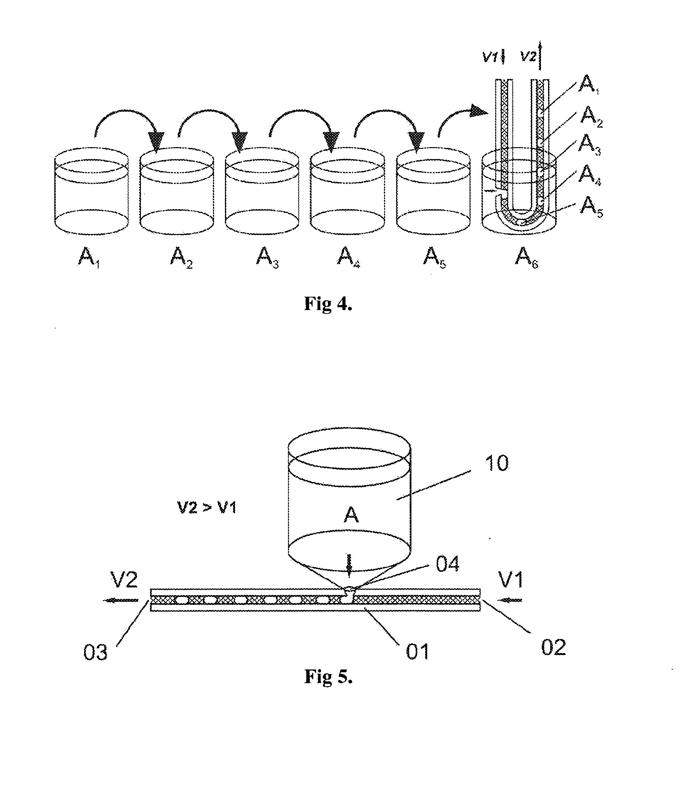

Fig. 4 zeigt schematisch die Erzeugung einer Sequenz aus unterschiedlichen Fluidproben A₁ bis A₆. Durch ein z.B. programmgesteuertes Eintauchen des Mikrokanals 01 in unterschiedliche Fluidproben A₁ bis A₆, die sich in mehreren Behältern 10 befinden, sowie durch eine Taktung der Flussraten V1 und V2 können definierte Segmentsequenzen erzeugt werden, in denen sich die aufeinander folgenden Segmente oder Segment-Pakete drastisch in ihrer Zusammensetzung unterscheiden können. Die erfindungsgemäße Vorrichtung ist daher insbesondere für die programmgesteuerte Aufnahme von unterschiedlichen Fluidproben aus matrixartig angeordneten Probenvorlagen geeignet. Hierbei werden die matrixartig angeordneten Fluidproben aus z.B. Mikrotiterplatten effizient in eine serielle Probensequenz überführt. Dies ist anwendungstechnisch z.B. im Bereich der miniaturisierten kombinatorischen Chemie als auch im Bereich des Hochdurchsatz-Screenings von Bedeutung.

Mit der hier beschriebenen Vorrichtung und dem erläuterten Verfahren zu ihrem Betrieb können Fluidproben aus üblichen Vorlagen wie z.B. Mikrotiterplatten durch einen parallelseriell Transfer digitalen mikrofluidischen Prozessen zugänglich gemacht werden. Die Anwendung dieses parallel-seriellen Transferverfahrens liefert präzise Probensequenzen der Probenlösungen mit Segmentvolumen im µL-, nL- und pL-Bereich.

In Fig. 5 ist ein weiteres Ausführungsbeispiel der erfindungsgemäßen Vorrichtung schematisch dargestellt, bei dem die segmenterzeugende Düse 04 direkt mit dem Probenbehälter 10 verbunden ist (hier dargestellt mit dem Behälterboden). Hierbei ist die Düse 04 direkt in die Wandung des Probenbehälters 10 integriert und die Probenlösung A wird durch diese Verbindung in das Mikrokanalsystem 01 transferiert. Mit diesem Ausführungsbeispiel können mit Hilfe einer entsprechenden Ansteuerung der Fluidaktorik und durch Wechseln der Fluidprobenlösung Aᵢ Segmentsequenzen aus unterschiedlichen Probenlösungen erzeugt werden.

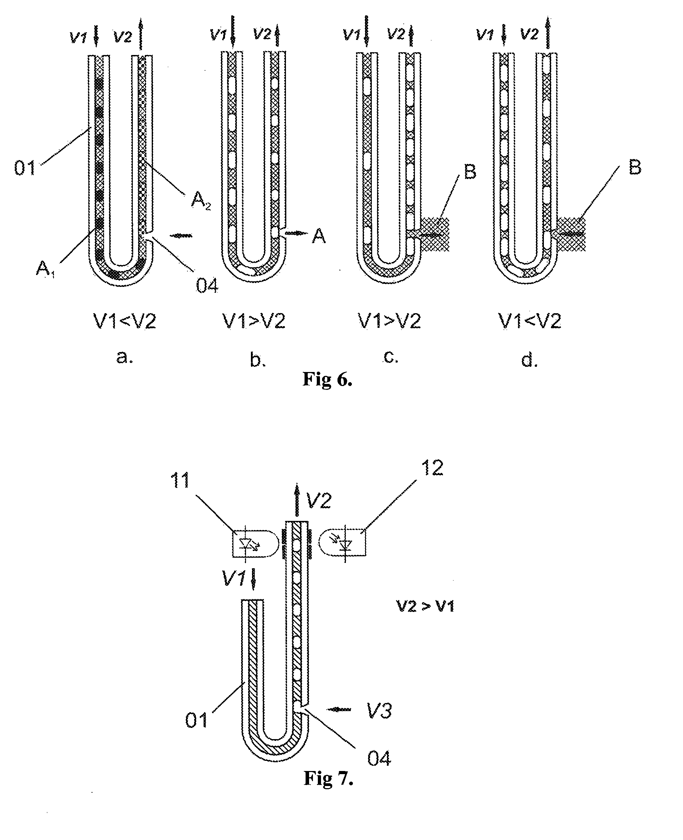

Wie durch die in Fig. 6 gezeigten Ausführungsformen verdeutlicht wird, ist die erfindungsgemäße Vorrichtung weiterhin dazu geeignet, bereits bestehende bzw. erzeugte Segmentsequenzen zu manipulieren. Durch Vorbeiführen einer bereits erzeugten Sequenz an der Düsenöffnung 04 innerhalb des Mikrokanals 01 können so z.B. Mischsegmente aus verschiedenen Probenlösungen realisiert werden, wenn die oben beschriebenen Verfahrensbedingungen (V1<V2) beibehalten werden (Fig. 6a). Hierbei kann das Mischungsverhältnis durch Anlegen verschiedener Volumenströme V1 und V2 eingestellt werden. Durch Anlegen inverser Flussratenbedingungen (V2<V1) können aber auch Segmente in einer Sequenz im Volumen reduziert werden (Fig. 6b). Wenn unter diesen Strömungsbedingungen ein Segment an der Düsenöffnung 04 vorbeiströmt, wird ein Teil der Fluidprobe aus der Düse nach außen gedrückt, sodass sich der resultierende Volumenstrom im Mikrokanal 01 verringert. Die Separationsphase (Trägerfluid) tritt hierbei nicht durch die Düsenöffnung 04 aus, da die Oberflächenspannung zwischen den nicht mischbaren Phasen dies verhindert.

Wird als externe Flüssigkeit (die sich außerhalb des Mikrokanals 01 befindet und an der Düsenöffnung 04 außen anliegt) anstelle einer Fluidprobe A das Trägerfluid B eingesetzt, kann der Abstand der Segmente im Mikrokanal 01 manipuliert werden, ohne die Probensegmente zu verändern. Auf diese Art und Weise ist es möglich in einer Sequenz den Abstand zwischen einzelnen Segmenten zu reduzieren, indem V1>V2 eingestellt wird (Fig. 6c) oder zu vergrößern, indem V1<V2 eingestellt wird (Fig. 6d).

In Fig. 7 ist ein Versuchsaufbau zur Bestimmung der Sequenzeigenschaften, wie z.B. der Segmentlängen und Segmentabstände, dargestellt. Hierfür ist ein photometrischer Mikrodurchfluss-Detektor direkt auf dem transparenten Mikrokanal 01 (Schlauch) montiert, bei dem auf der Beleuchtungsseite eine LED 11 als Lichtquelle und auf der Detektionsseite eine Photodiode 12 verwendet wird. Beide Dioden sind mit Hilfe von Blenden direkt an den Schlauch 01 montiert. Die so entstandene Messstelle ermöglicht es, Probensegmente sowohl anhand ihrer unterschiedlichen Brechzahlen im Vergleich zu der Separationsphase (Trägerfluid) als auch anhand unterschiedlicher Absorptionseigenschaften zu detektieren.

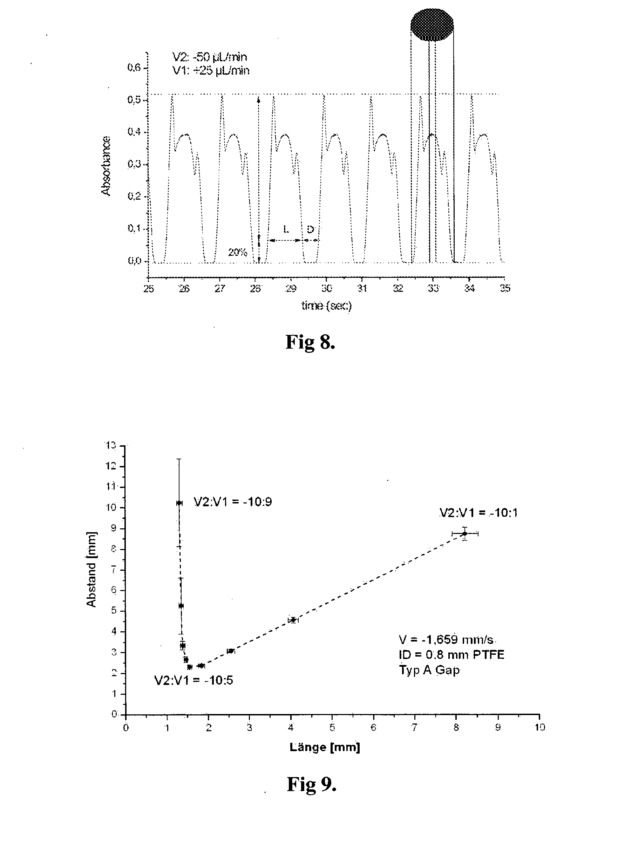

In Fig. 8 ist exemplarisch ein Beispiel für die detektierten Signale dargestellt, die mit der zuvor genannten Durchfluss-Detektoranordnung unter den folgenden Bedingungen erhalten werden. Zur Bestimmung der Sequenzqualität wurde eine Probenlösung aus Ethanol mit einem Farbstoff (Kristallviolett) angefärbt und mit Hilfe der vorgestellten Vorrichtung in Segmente überführt. Als Separationshase (Trägerfluid) wurde ein perfluoriertes Alkan verwendet (Perfluormethyldecalin). Die Auswertung der in Fig. 8 dargestellten Segmentverläufe bei unterschiedlichen Flussratenverhältnissen V2/V1 ist als Diagramm in Fig. 9 dargestellt und zeigt die hohe Reproduzierbarkeit der erzeugten Segmente und die Qualität der mit dem erfindungsgemäßen Verfahren erzeugten Segmentsequenzen.

### Bezugszeichenliste

- 01: - Mikrokanal
- 02: - Zuleitung
- 03: - Ableitung
- 04: - Düsenöffnung

- 10: - Behälter für Fluidprobe
- 11: - LED
- 12: - Photodiode

- A: - Fluidprobe
- B: - Trägerfluid
- C: - Probensegmente
- V1: - Zuführvolumenstrom
- V2: - Abführvolumenstrom
- V3: - Düsenvolumenstrom
- d: - Kanaldurchmesser des Mikrokanals

## Patentansprüche

1. Vorrichtung zur Erzeugung und/oder Anordnung von Sequenzen einer oder mehrerer Fluidproben (A) in einem Trägerfluid (B), welches mit den Fluidproben (A) nicht mischbar ist, umfassend:
- einen Mikrokanal (01) mit einer Zuleitung (02), einer Ableitung (03) und einer zwischen Zuleitung (02) und Ableitung (03) in den Mikrokanal (01) mündenden Düsenöffnung (04);
- eine Fördereinrichtung, die das Trägerfluid (B) mit einem Zuführvolumenstrom (V1) über die Zuleitung (02) in den Mikrokanal (01) einpumpt;
- einen die Fluidprobe (A) enthaltenden Probenbehälter (10) ;
**dadurch gekennzeichnet, dass** die Fördereinrichtung das Trägerfluid (B) mit einem Abführvolumenstrom (V2) über die Ableitung (03) aus dem Mikrokanal (01) absaugt; dass im Probenbehälter (10) die Düsenöffnung (04) mit der Fluid-probe (A) in Kontakt steht; dass die Vorrichtung weiterhin eine Steuereinheit umfasst, welche die Fördereinrichtung ansteuert, um das Verhältnis zwischen Zuführvolumenstrom (V1) und Abführvolumenstrom (V2) zu variieren; und dass der Querschnitt der Düsenöffnung (04) folgende Bedingungen erfüllt:
a) wenn der Zuführvolumenstrom gleich dem Abführvolumenstrom ist (V1=V2), tritt kein Trägermedium (B) aus der Düsenöffnung (04) in den Probenbehälter (10) aus und keine Fluidprobe (A) in den Mikrokanal (01) ein,
b) wenn der Abführvolumenstrom größer als der Zuführvolumenstrom ist (V2>V1), tritt Fluidprobe (A) in die Düsenöffnung (04) ein, sodass es sich als Probensegment (C) in den Strom des Trägermediums (B) einlagert.

2. Vorrichtung nach Anspruch 1, **dadurch gekennzeichnet, dass** sie eine Positioniereinheit umfasst, durch welche die Düsenöffnung (04) des Mikrokanals (01) in verschiedene Probenbehälter (10) einbringbar ist.

3. Vorrichtung nach Anspruch 2, **dadurch gekennzeichnet, dass** die mehreren Probenbehälter (10) matrixartig angeordnet sind, insbesondere in Form einer Mikrotiterplatte.

4. Vorrichtung nach einem der Ansprüche 1 bis 3, **dadurch gekennzeichnet, dass** die Düsenöffnung (04) als V-förmiger Einschnitt in einem durch einen Schlauch gebildeten Mikrokanal ausgebildet ist.

5. Vorrichtung nach einem der Ansprüche 1 bis 4 **dadurch gekennzeichnet, dass** die Fördereinrichtungen als Spritzenpumpen ausgebildet sind.

6. Vorrichtung nach einem der Ansprüche 1 bis 5 **dadurch gekennzeichnet, dass** der Probenbehälter (10) unterhalb des Pegels der Fluidprobe (A) eine Öffnung aufweist, mit der die Düsenöffnung (04) des Mikrokanals (01) verbunden ist.

7. Vorrichtung nach einem der Ansprüche 1 bis 6, **dadurch gekennzeichnet, dass** der Mikrokanal (01) in Strömungsrichtung nach des Düsenöffnung (04) einen transparenten Bereich aufweist, an welchem ein.optischer Sensor (11, 12) angeordnet ist, der die im Trägerfluid (8) eingebrachten Segmente (C) der Fluidproben selektiert.

8. Verfahren zur Erzeugung und/oder Anordnung von Sequenzen einer oder mehrerer Fluidproben (A) in einem Trägerfluid (B), welches mit den Fluidproben (A) nicht mischbar ist, die folgenden Schritte umfassend:
- Zufuhr des Trägerfluids (B) über eine Zuleitung (02) in einen Mikrokanal (01) mit einem Zuführvolumenstrom (V1);
- gleichzeitiges Absaugen des Trägerfluids (B) über eine Ableitung (03) aus dem Mikrokanal (01) mit einem Abführvolumenstrom (V2);
- Einbringen einer Düsenöffnung (04), die sich im Mikrokanal (01) zwischen der Zuleitung (02) und der Ableitung (03) befindet, in einen Behälter (10), der die Fluid-probe (A) enthält;
- Einstellen einer Differenz zwischen Zuführvolumenstrom (V1) und Abführvolumenstrom (V2) und dadurch Erzeugen eines Düsenvolumenstroms (V3) durch die Düsenöffnung (04) deren Betrag der eingestellten Differenz entspricht.

9. Verfahren nach Anspruch 8, wobei in den Behälter (10) die Fluidprobe (A) eingefüllt wird, der Abführvolumenstrom größer als der Zuführvolumenstrom eingestellt wird (V2>V1), sodass eine Menge der Fluidprobe (A) mit einem Düsenvolumenstrom (V3) durch die Düsenöffnung (04) in den Mikrokanal eingesaugt wird, und mehrere Segmente (C) der Fluidprobe (A) in das im Mikrokanal (01) geführt Trägermedium (B) zur Erzeugung einer Sequenz eingelagert werden.

10. Verfahren nach Anspruch 8 oder 9, **dadurch gekennzeichnet, dass** die Düsenöffnung (04) des Mikrokanals (01) nacheinander in unterschiedlichen Fluidproben (A₁ ... A₆) eingebracht wird.

11. Verfahren nach einem der Ansprüche 8 bis 10, **dadurch gekennzeichnet, dass** die zuvor erzeugte Sequenz dem Mikrokanal (01) über die Zuleitung (02) erneut zugeführt wird, während die Düsenöffnung (04) in eine zweite Fluidprobe eingebracht ist, um durch erneutes Einstellen einer Differenz zwischen Zuführvolumenstrom V1 und Abführvolumenstrom V2 mit V2>V1 Mengen der zweiten Fluidprobe durch die Düsenöffnung (04) in den Mikrokanal (01) einzusaugen und mehrere Segmente der zweiten Fluidprobe (A₂) in das im Mikrokanal geführte Tragermedium (B) einzulagern oder mit den Segmenten der ersten Fluidprobe (A₁) zu mischen.

12. Verfahren nach einem der Ansprüche 8 bis 11, **dadurch gekennzeichnet, dass** die zuvor erzeugte Sequenz dem Mikrokanal (01) über die Zuleitung (02) erneut zugeführt wird, während die Düsenöffnung (04) in eine Menge von Trägermedium (B) eingebracht ist, wobei der Abführvolumenstrom (V2) größer als der Zuführvolumenstrom (V1) eingestellt wird, um zwischen den Sequenzen der Fluidprobe (A) weiteres Trägermedium (B) durch die Düsenöffnung in den Mikrokanal (01) einzusaugen, oder der Abführvolumenstrom (V2) kleiner als der Zuführvolumenstrom (V1) eingestellt wird, um Teile des zwischen den Sequenzen der Fluidprobe (A) im Mikrokanal (01) befindlichen Trägermediums (3) durch die Düsenöffnung (04) herauszupressen.

13. Verfahren nach einem der Ansprüche 8 bis 12, **dadurch gekennzeichnet, dass** beim Einstellen der Differenz zwischen Zuführvolumenstrom (V1) und Abführvolumenstrom (V2) ein Verhältnis V2-V1 im Bereich 1,05:1 bis 20:1 gewählt wird.

## Claims

1. A device for generating and/or arranging sequences of one or more fluid samples (A) in a carrier fluid (B) which is not miscible with the fluid samples (A), comprising:
- a microchannel (01) with a feed line (02), a discharge line (03), and a nozzle opening (04) which opens between feed line (02) and discharge line (03) into the microchannel (01);
- a conveyance device which pumps the carrier fluid (B) using a feed volume flow (V1) via the feed line (02) into the microchannel (01);
- a sample container (10) containing the fluid sample (A) ;
**characterized in that** the conveyance device suctions the carrier fluid (B) out of the microchannel (01) via the discharge line (03) using a discharge volume flow (V2); **in that**, in the sample container (10) the nozzle opening (04) is in contact with the fluid sample (A); **in that** the device further comprises a control unit which controls the conveyance direction, in order to vary the ratio between feed volume flow (V1) and discharge volume flow (V2); and **in that** the cross section of the nozzle opening (04) satisfies the following conditions:
a) if the feed volume flow is equal to the discharge volume flow (V1=V2), no carrier medium (B) exits from the nozzle opening (04) into the sample container (10), and no fluid sample (A) enters into the microchannel (01),
b) if the discharge volume flow is greater than the feed volume flow (V2>V1), fluid sample (A) enters into the nozzle opening (04), so that it is embedded as sample segment (C) in the flow of the carrier medium (B).

2. Device according to claim 1, **characterized in that** the device comprises a positioning unit through which the nozzle opening (04) of the microchannel (01) can be introduced into different sample containers (10).

3. Device according to claim 2, **characterized in that** the several sample containers (10) are in a matrix-like arrangement, particularly in the form of a microtiter plate.

4. Device according to one of claims 1 to 3, **characterized in that** the nozzle opening (04) is designed as a V-shaped cut into a microchannel formed by a hose.

5. Device according to one of claims 1 to 4, **characterized in that** the conveyance devices are designed as syringe pumps.

6. Device according to one of claims 1 to 5, **characterized in that** the sample container (10) presents an opening under the level of the fluid sample (A), to which opening the nozzle opening (04) of the microchannel (01) is connected.

7. Device according to one of claims 1 to 6, **characterized in that** the microchannel (01) presents, in the flow direction after the nozzle opening (04), a transparent area on which an optical sensor (11, 12) is arranged, which detects the segments (C) of the fluid sample that are introduced in the carrier fluid (B).

8. Method for the generation and/or arrangement of sequences of one or more fluid samples (A) in a carrier fluid (B) which is not miscible with the fluid samples (A), comprising the following steps:
- supplying the carrier fluid (B) via a feed line (02) into a microchannel (01) using a feed volume flow (V1) ;
- simultaneous suctioning the carrier fluid (B) via a discharge line (03) out of the microchannel (01) using a discharge volume flow (V2);
- positioning a nozzle opening (04) which is located in the microchannel (01) between the feed line (02) and the discharge line (03), in a container (10) which contains the fluid sample (A); and
- setting a difference between feed volume flow (V1) and discharge volume flow (V2), and thus generating of a nozzle volume flow (V3) through the nozzle opening (04), the amount of which corresponds to the set difference.

9. Method according to claim 8, wherein the fluid sample (A) is filled into the container (10), the discharge volume flow is set to be greater than the feed volume flow (V2>V1), so that a quantity of the fluid sample (A) is suctioned into the microchannel (01) via the nozzle opening (04) using a nozzle volume flow (V3), and several segments (C) of fluid sample (A) are embedded in the carrier medium (B) which is led in the microchannel (01), for the generation of a sequence.

10. Method according to claim 8 or 9, **characterized in that** the nozzle opening (04) of the microchannel (01) is introduced successively into different fluid samples (A1 ... A6).

11. Method according to one of claims 8 to 10, **characterized in that** the previously generated sequence is again supplied to the microchannel (01) via the feed line (02), while the nozzle opening (04) is introduced into a second fluid sample, in order to suction, by resetting a difference between feed volume flow V1 and discharge volume flow V2 with V2>V1, quantities of the second fluid sample through the nozzle opening (04) into the microchannel (01), and embed several segments of the second fluid sample (A2) in the carrier medium (B) which is led in the microchannel (01), or mix them with the segments of the first fluid sample (A1).

12. Method according to one of claims 8 to 11, **characterized in that** the previously generated sequence is again supplied to the microchannel (01) via the feed line (02), while the nozzle opening (04) is introduced into a quantity of carrier medium (B), wherein the discharge volume flow (V2) is set to be greater than the feed volume flow (V1), in order to suction, between the sequences of the fluid sample (A), additional carrier medium (B) through the nozzle opening (04), into the microchannel (01), or the discharge volume flow (V2) is set to be smaller than the feed volume flow (V1), in order to push portions of the carrier medium (B) located between the sequences of the fluid sample (A) in the microchannel (01), through the nozzle opening (04).

13. Method according to one of claims 8 to 12, **characterized in that** when setting the difference between feed volume (V1) and discharge volume flow (V2), a ratio V2:V1 in the range from 1.05:1 to 20:1 is selected.

## Revendications

1. Dispositif permettant de produire et/ou disposer des séquences d'un ou de plusieurs échantillons de fluide (A) se trouvant au sein d'un fluide vecteur (B) qui est immiscible avec les échantillons de fluide (A), comprenant :
- un microcanal (01) pourvu d'une ligne d'introduction (02), d'une ligne d'évacuation (03) et d'une ouverture en filière (04) qui débouche dans le microcanal (01) entre la ligne d'introduction (02) et la ligne d'évacuation (03) ;
- un organe de transport destiné à pomper le fluide vecteur (B) dans le microcanal (01) au moyen d'un débit volumique d'introduction (V1) empruntant la ligne d'introduction (02) ;
- un récipient d'échantillons (10) contenant l'échantillon de fluide (A) ;
**caractérisé en ce que** l'organe de transport aspire le fluide vecteur (B) se trouvant dans le microcanal (01) au moyen d'un débit volumique d'évacuation (V2) empruntant la ligne d'évacuation (03) ; qu'au sein du récipient d'échantillons (10), l'ouverture en filière (04) est en contact avec l'échantillon de fluide (A) ; que ledit dispositif comprend en outre une unité de commande laquelle commande l'organe de transport de manière à faire varier le rapport entre le débit volumique d'introduction (V1) et le débit volumique d'évacuation (V2) ; et que la section transversale de l'ouverture en filière (04) remplit les conditions suivantes :
a) lorsque le débit volumique d'introduction est égal au débit volumique d'évacuation (V1=V2), aucun milieu vecteur (B) ne sort par l'ouverture en filière (04) pour entrer dans récipient d'échantillons (10), et aucun échantillon de fluide (A) n'est introduit dans le microcanal (01),
b) lorsque le débit volumique d'évacuation est supérieur au débit volumique d'introduction (V2>V1), de l'échantillon de fluide (A) entre dans l'ouverture en filière (04), formant ainsi un segment d'échantillon (C) qui est incorporé au flux du milieu vecteur (B).

2. Dispositif selon la revendication 1, **caractérisé en ce qu'**il comprend une unité de positionnement permettant d'introduire l'ouverture en filière (04) du microcanal (01) dans différents récipients d'échantillons (10).

3. Dispositif selon la revendication 2, **caractérisé en ce que** lesdits plusieurs récipients d'échantillons (10) sont disposés sous forme d'une matrice, notamment sous forme d'une plaque microtitre.

4. Dispositif selon l'une des revendications 1 à 3, **caractérisé en ce que** l'ouverture en filière (04) est réalisée sous forme d'une coupe en V pratiquée dans un tuyau constituant un microcanal.

5. Dispositif selon l'une des revendications 1 à 4, **caractérisé en ce que** lesdits organes de transport sont réalisés sous forme de pousse-seringues.

6. Dispositif selon l'une des revendications 1 à 5, **caractérisé en ce que** le récipient d'échantillons (10) comporte une ouverture qui est située en-dessous du niveau de l'échantillon de fluide (A) et qui est reliée à l'ouverture en filière (04) du microcanal (01).

7. Dispositif selon l'une des revendications 1 à 6, **caractérisé en ce qu'**en aval de l'ouverture en filière (04), le microcanal (01) comporte une zone transparente sur laquelle est disposé un capteur optique (11, 12) permettant de détecter les segments (C) de l'échantillon de fluide lesquels ont été introduits dans le fluide vecteur (B).

8. Procédé permettant de produire et/ou disposer des séquences d'un ou de plusieurs échantillons de fluide (A) se trouvant au sein d'un fluide vecteur (B) qui est immiscible avec les échantillons de fluide (A), comprenant les étapes suivantes :
- introduction du fluide vecteur (B) dans un microcanal (01) au moyen d'un débit volumique d'introduction (V1) empruntant une ligne d'introduction (02) ;
- de manière simultanée, aspiration du fluide vecteur (B) se trouvant dans le microcanal (01) au moyen d'un débit volumique d'évacuation (V2) empruntant une ligne d'évacuation (03) ;
- introduction d'une ouverture en filière (04), laquelle se trouve au sein du microcanal (01) entre la ligne d'introduction (02) et la ligne d'évacuation (03), dans un récipient (10) contenant l'échantillon de fluide (A) ;
- ajustement d'une différence entre le débit volumique d'introduction (V1) et le débit volumique d'évacuation (V2) pour ainsi mettre en place un débit volumique de filière (V3) qui emprunte l'ouverture en filière (04) et dont l'amplitude correspond à la différence résultant dudit ajustement.

9. Procédé selon la revendication 8, consistant à introduire un échantillon de fluide (A) dans un récipient (10), à ajuster le débit volumique d'évacuation de manière à ce qu'il soit supérieur au débit volumique d'introduction (V2>V1), faisant en sorte qu'une certaine quantité de l'échantillon de fluide (A) soit aspirée dans le microcanal au moyen d'un débit volumique de filière (V3) empruntant l'ouverture en filière (04), et que plusieurs segments (C) de l'échantillon de fluide (A) soient incorporés dans le milieu de support (B) circulant dans le microcanal (01) pour ainsi produire une séquence.

10. Procédé selon la revendication 8 ou 9, **caractérisé en ce que** l'ouverture en filière (04) du microcanal (01) est introduite successivement dans différents échantillons de fluide (A₁ ... A₆).

11. Procédé selon l'une des revendications 8 à 10, **caractérisé en ce que** la séquence précédemment produite est réintroduite dans le microcanal (01) à travers la ligne d'introduction (02) pendant que l'ouverture en filière (04) est introduite dans un deuxième échantillon de fluide, afin d'aspirer certaines quantités du deuxième échantillon de fluide à travers l'ouverture en filière (04) dans le microcanal (01), en ajustant de nouveau une différence entre le débit volumique d'introduction V1 et le débit volumique d'évacuation V2, avec V2>V1, et d'incorporer plusieurs segments du deuxième échantillon de fluide (A₂) dans le milieu de support (B) circulant dans le microcanal ou de les mélanger avec les segments du premier échantillon de fluide (A₁).

12. Procédé selon l'une des revendications 8 à 11, **caractérisé en ce que** la séquence précédemment produite est réintroduite dans le microcanal (01) à travers la ligne d'introduction (02) pendant que l'ouverture en filière (04) est introduite dans une certaine quantité de milieu de support (B), le débit volumique d'évacuation (V2) étant ajusté tel qu'il est supérieur au débit volumique d'introduction (V1) pour ainsi aspirer, entre les séquences de l'échantillon de fluide (A), du milieu de support (B) supplémentaire à travers l'ouverture en filière dans le microcanal (01), ou le débit volumique d'évacuation (V2) étant réglé tel qu'il est inférieure au débit volumique d'introduction (V1) pour ainsi expulser par l'ouverture en filière (04) certaines parties du milieu de support (B) se trouvant au sein du microcanal (01) entre les séquences de l'échantillon de fluide (A).

13. Procédé selon l'une des revendications 8 à 12, **caractérisé en ce que** l'on ajuste la différence entre le débit volumique d'introduction (V1) et le débit volumique d'évacuation (V2) de manière à obtenir un rapport V2 : V1 compris entre 1,05 : 1 et 20 : 1.
